# EUROPÄISCHE PATENTANMELDUNG

(11) **EP 1 174 172 A2**
(43) Veröffentlichungstag der Anmeldung: **23.01.2002**
(21) Anmeldenummer: 01109836.5
(22) Anmeldetag: 23.04.2001
(51) Int. Cl.: B01D 53/84, B01D 53/14

(54) **Verfahren zur Reinigung eines Abgases und Anlage zur Durchführung des Verfahrens**

(30) Priorität: 19.07.2000 CH 14272000
(71) Anmelder: D.I. Wieser-Linhart, Emil A.J., 5020 Salzburg (AT)
(72) Erfinder: D.I. Wieser-Linhart, Emil A.J., 5020 Salzburg (AT)
(74) Vertreter: Blum, Rudolf Emil Ernst

(57) **Zusammenfassung**

Der Biowäscher (11) und das Nasselektrofilter (13) sind in einem gemeinsamen Behälter (1) angeordnet. Der Behälter (1) endet unten bei einem Belebtschlammbekken (2). Beim Reingasaustritt (16) ist ein Tropfenabscheider (17) vorhanden. Das zu reinigende Abgas, das Verunreinigungen in Form von Aerosolen, Staub und organischen Gasen enthält, strömt durch den Eintritt (6) in den Behälter (1) und durchströmt vorerst den Vorabscheider (7) und danach den Biowäscher (11) und das Nasselektrofilter (13). Das Prozesswasser für die konstante Berieselung des Vorabscheiders (7) und des Biowäschers, und für die intermittierende Abreinigung des Nasselektrofilters (13) und des Tropfenabscheiders (17) wird über das Belebungsbecken (2) kreislaufgeführt. Im Belebungsbecken (2) wird das kreislaufgeführte Prozesswasser regeneriert. Der dem Biowäscher (11) und dem Tropfenabscheider (17) zugeführte Anteil des Prozesswassers wird in einem Feststoffabscheider (22) von Feststoffen befreit und in einem Wärmetauscher (28) für ein optimales Bakterienwachstum gekühlt.

## Beschreibung

Die vorliegende Erfindung betrifft ein Verfahren zur Reinigung eines Abgases, das Verunreinigungen in Form von Aerosolen, Staub und organischen Gasen aufweist. Sie betrifft auch eine Anlage zur Durchführung des Verfahrens.

Solche Abgase entstehen bei vielen industriellen thermischen Umwandlungsverfahren, typischerweise bei einer Mischverbrennung, einer Heisspressung oder auch einer thermischen Trocknung. Als nicht begrenzendes Beispiel können Holzverarbeitungswerke, wie Werke zur Herstellung von z.B. Spanplatten, genannt werden.

Die hier zur Diskussion stehenden Verunreinigungen sind unter anderem Aerosole mit einer typischen Partikelgrösse von 0,1 µm. Solche Aerosole treten als sogenannter blauer Rauch auf. Weitere Verunreinigungen bilden Flüssigkeitsnebel aus Paraffin und Öl mit einer typischen Partikelgrösse von 1 µm. Diese Flüssigkeitsnebel treten als sogenannter weisser Rauch auf. Noch weitere Verunreinigungen treten als Flugstaub mit einer typischen Partikelgrösse von 1-3 µm auf.

Die Feinpartikel sind sehr oft hydrophob, d.h. wasserabweisend und stark elektrisch aufgeladen und können daher nur in Nasselektrofiltern abgeschieden werden. Umgekehrt können jedoch organische Gase in Nasselektrofiltern nicht abgeschieden werden.

Hier will die Erfindung Abhilfe schaffen. Die Erfindung, wie sie in den Ansprüchen gekennzeichnet ist, löst die Aufgabe, ein Verfahren und eine Anlage zur Reinigung eines Verunreinigungen in Form von Aerosolen, Staub und organischen Gasen aufweist zu schaffen, gemäss welchen sowohl Feinpartikel als auch organische Gase kostengünstig in einer einfach ausgebauten, gedrängt ausgebildeten Anlage vollständig einwandfrei ausgeschieden werden können.

Die Vorteile der Erfindung sind insbesondere darin zu sehen, dass zwei unterschiedliche Reinigungsvorgänge in einem einzigen Durchgang und in einem gedrängt ausgebildeten Behälter vereinigt sind, so dass das Reinigen des Abgases in einem einzigen Durchlauf sehr kostengünstig durchgeführt werden kann. Für die Behandlung sämtlicher Arbeitseinheiten mögen diese kontinuierlich oder intermittierend mit Prozesswasser für unterschiedliche Zwecke beaufschlagt werden, wird lediglich ein einziger Wasserkreislauf benötigt.

Im folgenden wird die Erfindung anhand von zwei Ausführungswegen darstellenden Zeichnungen beispielsweise näher erläutert. Es zeigt:
Figur 1 schematisch eine erste Ausführung einer Anlage zur Durchführung des erfindungsgemässen Verfahrens, und
Figur 2 schematisch eine zweite Ausführung der Anlage zur Durchführung des erfindungsgemässen Verfahrens.

In einem Behälter 1 ist unten ein mit im Kreislauf geführten Prozesswasser gefülltes Belebungsbekken 2 angeordnet. Das Belebungsbecken 2 ist mit einer Bodenbelüftung 3 ausgerüstet, die mit einer Frischluftquelle 4 in Verbindung steht.

Weiter ist das Belebungsbecken 2 mit einer noch zu beschreibenden Nahrungsstoffquelle 5 verbunden.

Das zu reinigende Abgas tritt beim Abgaseintritt 6 in den Behälter 1 ein.

Dieser Abgaseintritt 6 ist bei einem Vorabscheider 7 angeordnet, der auch die Gasverteilfunktion übernimmt. Über dem Vorabscheider 7 ist eine Sprühvorrichtung 8 angeordnet. Diese Sprühvorrichtung 8 steht über eine Abzweigleitung 9 mit einer Austrittsleitung 10 des Belebungsbeckens 2 in Verbindung.

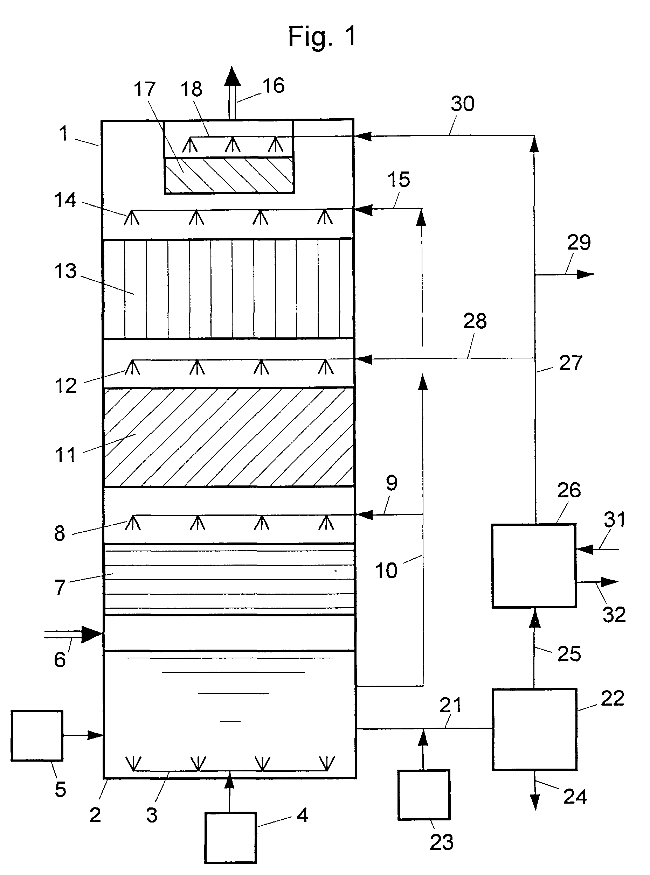

Bei der Ausführung nach Figur 1 ist über dem Vorabscheider 7 ein Biowäscher 11 mit einer Sprühvorrichtung 12 angeordnet.

Die Zufuhr des Prozesswassers zur Sprühvorrichtung 12 ist weiter unten beschrieben.

Über dem Biowäscher 11 ist ein Nasselektrofilter 13 mit einer Sprühvorrichtung 14 angeordnet. Diese Sprühvorrichtung 14 steht über ihre Zufuhrleitung 15 mit der Austrittsleitung 10 des Belebungsbeckens 2 in Verbindung.

Beim Reingasaustritt 16 ist ein Tropfenabscheider 17 angeordnet, über welchem eine Sprühvorrichtung 18 angeordnet ist, deren Prozesswasserzufuhr ebenfalls weiter unten beschrieben sein wird.

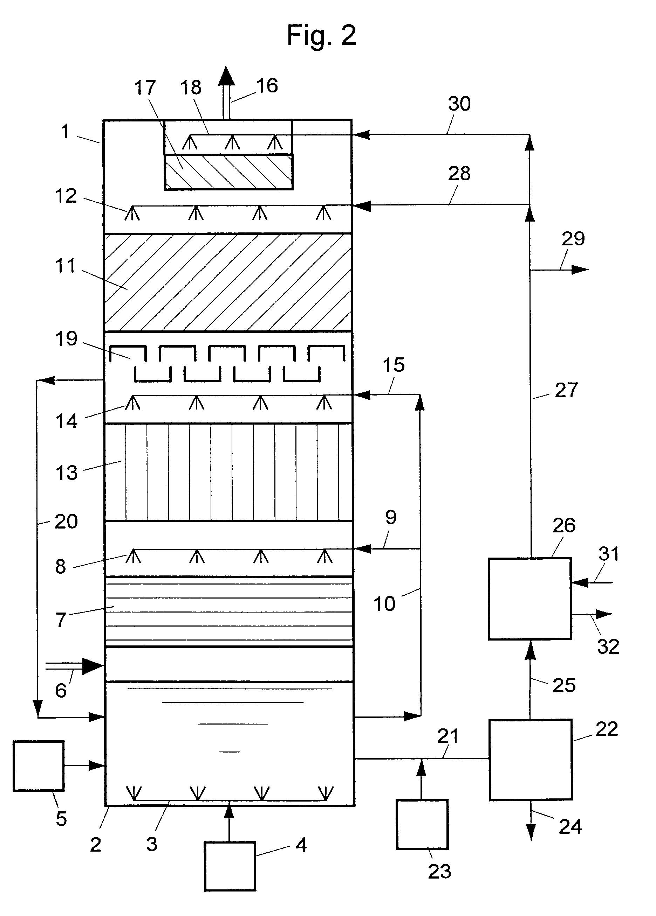

Der Aufbau der Ausführung gemäss der Figur 2 unterscheidet sich insofern vom Aufbau gemäss der Figur 1, indem der Biowäscher 11 über dem Nasselektrofilter 13 angeordnet ist. Bei dieser Ausführung ist zwischen dem Biowäscher 11 und dem Nasselektrofilter 13 ein Trennboden 19 eingefügt, von welchem eine das Nasselektrofilter 13 umgehende Ablaufleitung 20 direkt zum Belebungsbecken 2 verläuft.

Bei beiden Ausführungen verläuft vom Belebungsbecken 2 eine weitere Austrittsleitung 21 zu einem Feststoffabscheider 22. Diese Austrittsleitung 21 steht mit einer Flockungsmittelquelle 23 in Verbindung. Die Bezugsziffer 24 bezeichnet die Abführleitung des abgeschiedenen Feststoffes.

Vom Feststoffabscheider 22 verläuft eine Leitung 25 zu einem Wärmetauscher 26.

Bei der Ausführung nach der Figur 1 zweigt von der Austrittsleitung 27 des Wärmetauschers 26 die Zufuhrleitung 28 zur Sprühvorrichtung 12 des Biowäschers 11 ab.

Die Bezugsziffer 29 bezeichnet eine Auslassleitung zur Entfernung von überschüssigem Wasser.

Schliesslich führt die Austrittsleitung 27 zur Zufuhrleitung 30 des Tropfenabscheiders 17.

Bei der Ausführung nach der Figur 2 zweigt die Zufuhrleitung 28 zur Sprühvorrichtung 12 des Biowäschers 11 erst nach der Auslassleitung 29 ab und schlussendlich ist auch die Zufuhrleitung 30 zur Sprühvorrichtung 18 des Tropfenabscheiders 17 ersichtlich.

Allgemein ist ersichtlich, dass sich die vorgestellten Varianten der Anlage im wesentlichen dadurch unterscheiden, dass in der Ausführung nach Figur 1 der Biowäscher 11 unter dem Nasselektrofilter 13 und in der Ausführung nach Figur 2 das Nasselektrofilter 13 unter dem Biowäscher 11 angeordnet ist.

Bei beiden Ausführungen tritt das zu reinigende Abgas beim Eintritt 6 in den Behälter 1 ein und wird durch den Vorabscheider 7 geführt. Dieser Vorabscheider 7 wird mit Prozesswasser kontinuierlich berieselt, welches vom Belebungsbecken 2 durch die Leitungen 9 und 10 der Sprühvorrichtung 8 zugeführt wird und im Kreislauf zurück in das Belebungsbecken 2 abtropft. Im Vorabscheider 7 erfolgt einerseits die Gasverteilung über den Querschnitt des Behälters 1, aber auch, wie noch beschrieben sein wird, eine Kühlung des Abgases und eine Vorreinigung von groben Abgasbestandteilen.

Nach dem Vorabscheider 7 tritt das Abgas bei der Ausführung nach Figur 1 in den mit einem strukturierten Bewuchsmedium gefüllten Biowäscher 11 ein.

Bei der Ausführung nach Figur 1 tritt das Abgas nach verlassen des Vorabscheiders 7 in ein wabenförmig aufgebautes Nasselektrofilter 13 ein.

Sowohl der Biowäscher 11 als auch das Nasselektrofilter 13 werden von unten nach oben durchströmt.

Bei der Ausführung nach Figur 2 ist das Nasselektrofilter 13 durch den Trennboden 19 vor dem abtropfenden Berieselungswasser des Biowäschers 11 geschützt, welches Berieselungswasser durch die Ablaufleitung 20 direkt zum Belebungsbecken 2 rückgeführt wird.

Das Nasselektrofilter 13 wird mit Kreislaufwasser, das unbehandelt vom Belebungsbecken 2 durch die Leitungen 10 und 15 der Sprühvorrichtung 14 zugeführt wird, intervallmässig abgereinigt.

Der Biowäscher 11 wird mit vorbehandeltem Prozesswasser kontinuierlich besprüht, das vom Belebungsbecken 2 durch die Austrittsleitung 21 zum Feststoffabscheider 22, danach durch den Wärmetauscher 26 und schliesslich durch die Leitungen 27 und 28 zur Sprühvorrichtung 12 strömt. Im Biowäscher 11 nimmt der aufgewachsene Bakterienfilm die organischen Gase auf und oxidiert dieselben.

Schliesslich verlässt das gereinigte Abgas den Behälter 1 durch den Reingasaustritt 16, und durchströmt vorerst den Tropfenabscheider 17, der intervallmässig mittels ebenfalls im Feststoffabscheider 22 und Wärmetauscher 26 vorbehandeltem Prozesswasser abgereinigt wird. Dieses Prozesswasser strömt vom Wärmetauscher 26 durch die Leitungen 27 und 30 zur Sprühvorrichtung 18, die über dem Tropfenabscheider 17 angeordnet ist.

Dem Belebungsbecken 42 wird von der Frischluftquelle 4 Luft zugeführt. Von der Nahrungsmittelquelle 5 wird dem Belebungsbecken Nahrungsmittel zur Stickstoff/ Phosphorversorgung zugeführt.

Von der Flockungsmittelquelle 23 wird dem Prozesswasser, das zum Feststoffabscheider 22 strömt, Polyelektrolyt als Flockungsmittel zugegeben. Der im Feststoffabscheider 22 abgeschiedene Feststoff wird durch die Leitung 24 abgeführt.

Durch die Auslassleitung 29, die von der Leitung 27 abzweigt, wird überschüssiges Abwasser, welches aus der teilweisen Kondensation der Rohgasfeuchte stammt, d.h. die Feuchte des zugeführten Abgases, aus dem Kreislauf abgeführt.

Die Auswahl der Ausführung nach Fig. 1 oder nach Fig. 2 hängt von der Zusammensetzung des zu reinigenden Abgases ab.

Wann das zu reinigende Abgas niedrige Aerosolgehalte aufweist, wird die Anordnung des Nasselektrofilters 13 über dem Biowäscher 11 gemäss der Ausführung nach Figur 1 gewählt, bei welcher der Trennboden 19 entfällt und somit die Anlage etwas einfacher wird.

Im Falle von hohen Aerosolgehalten ist die Anordnung nach der Figur 2 zu wählen, weil dadurch eine zusätzliche Verschmutzung des Biowäschers 11 durch das vom Nasselektrofilter 13 kommende Reinigungswasser vermieden wird.

Es ist noch zu bemerken, dass die Anlage derart ausgelegt ist, dass die Strömungsgeschwindigkeit des Abgases im Nasselektrofilter 13 und im Biowäscher 11 1-3 m/Sek. beträgt und die jeweilige Verweilzeit im Nasselektrofilter 13 und im Biowäscher 1-6 Sek. beträgt.

Nachfolgend werden die einzelnen Schritte der Behandlung des Abgases beschrieben.

Das durch den Eintritt 6 zuströmende Abgas weist Temperaturen im Bereich von 60°-200°C auf. Dieses Abgas wird vorerst durch das vom Vorabscheider 7 kommende Berieselungswasser durch eine Verdampfungskühlung auf den Primärtaupunkt 50°-70°C gekühlt.

Danach strömt das Abgas durch den Vorabscheider 7, der aus Rieselblechen aufgebaut ist und zusätzlich die Gasverteilung über den Querschnitt des Behälters 1 und somit dem Biowäscher 11 und Nasselektrofilter 13 bewirkt. Der Vorabscheider 7 ermöglicht den Übergang von groben, benetzbaren Partikeln mit einer Grösse >10 µm sowie die Aufnahme von leicht wasserlöslichen Gasbestandteilen. Das über die Sprühvorrichtung 8 dem Vorabscheider 7 zugeführte Prozess-, d.h. Berieselungswasser ist vorgängig im Belebungsbecken 2 regeneriert worden und somit aufnahmefähig für Verschmutzungen.

Danach durchströmt das Abgas entweder den Biowäscher 11, gefolgt vom Nasselektrofilter 13 gemäss der Ausführung nach Figur 1, oder das Nasselektrofilter 13 gefolgt vom Biowäscher 11 gemäss der Ausführung nach Figur 2.

Der Biowäscher 11 ist aus strukturierten Bewuchselementen (Füllkörper) aufgebaut, die einerseits einen Aufwuchs der Biomasse, andererseits ein leichtes Abspülen des Bewuchsfilmes ermöglichen. Der Biowäscher 11 wird kontinuierlich berieselt. Über den vorhandenen Wasserfilm und die darunter liegende Bakterienschicht erfolgt die Aufnahme der organischen Gase sowie die biokatalytische Oxidation. Die Bakterien werden somit aus dem Gas mit Substrat und aus dem Prozesswasser, also dem Berieselungswasser versorgt.

Dieses Prozesswasser wird vom Belebungsbecken 2 her zugeführt. Im Belebungsbecken 2 werden dem Prozesswasser von der Quelle 5 her Nahrungsstoffe für die Bakterien wie typischerweise Harnstoff und Phosphorsäure zur Versorgung mit Stickstoff N und Phosphor P zugeführt. Das aus den Belebungsbecken 2 entnommene Prozesswasser, dem von der Quelle 23 her ein Flockungshilfsmittel zugegeben worden ist, wird im Feststoffabscheider 22 von den Feststoffen befreit. Das Flockungshilfsmittel wird offensichtlich zur Verbesserung der Abscheideleistung des Feststoffabscheiders 22 zugegeben, da die Inhaltsstoffe des aus dem Belebungsbecken austretenden Prozesswassers feindispers sein können. Der Feststoffabscheider 22 kann je nach Inhaltsstoffen als Filter, Flotation oder Sedimentation ausgebildet sein. Im dem Feststoffabscheider 22 folgenden Wärmetauscher 26 wird das nun als Klarwasser vorliegende Prozesswasser um 5°-20°C zu einem Temperaturbereich von 35° bis 55°C gekühlt. Durch diese Kühlung wird bewirkt, dass der Primärtaupunkt weiter abgesenkt wird, was einerseits die Einhaltung des optimalen Temperaturbereiches für das Bakterienwachstum von 35°-55°C ermöglicht, andererseits durch Kondensation Abwasser zur Ausschleusung durch die Auslassleitung 29 erzeugt.

Somit kann die Betriebstemperatur je nach Gaszusammensetzung und Feuchte und erforderlichem Abbaugrad optimiert und konstant gehalten werden.

Die Kühlwasserversorgung für den Wärmetauscher 26, siehe die Anschlüsse 31, 32, kann sowohl aus einem geschlossenen Kühlturmkreislauf, aus Grund- oder Oberflächenwasser, oder auch aus einer Wärmepumpe erfolgen, die die Abwärme in ein Fernwärmenetz einspeist.

Durch dieses derart behandelte Prozesswasser, mittels welchem der Biowäscher berieselt wird, sind optimale Voraussetzungen für den Abbau der organischen Inhaltsstoffe des zu reinigenden Abgases gegeben. Die Biomasse optimiert sich aus der Mischpopulation von selbst. Beim Anfahren der Anlage entsteht nach ca. 4 Wochen ein Gleichgewichtszustand an zuwachsender und abgespülter Bakterienmasse, d.h. ein neu montierter Biowäscher 11 ist nach ca. 4 Wochen eingefahren.

Das entweder über oder unter dem Biowäscher 11 angeordnete Nasselektrofilter 13 ist aus sechseckigen röhrenförmigen Wabenelementen aufgebaut und hat eine typische Schlüsselweite von 200-400 mm bei einer Länge von 2-6 m. Im Zentrum einer jeweiligen, ein Wabenelement bildenden Röhre, befindet sich ein Sprühdraht, der auf einem oberen und unteren isolierten Spannrahmen befestigt ist. Der obere Spannrahmen ist in Isolierkammern gehaltert und wird extern mit einer negativen Gleichspannung mit 50-110 kV versorgt. Die Spannung und der Strom wird automatisch so geregelt, dass geringe oder keine Überschläge erfolgen. Die negative Korona am Sprühdraht bewirkt einen elektrischen Wind zu der sechseckigen Rohrinnenseite, die als Abscheideelektrode wirkt, und die austretenden Elektroden ionisieren die Bestandteile des Abgases, vorwiegend die Aerosole, durch Stossionisation. Sind nur die Feinpartikel mit einer Ladung versehen, bewegen sie sich entsprechend der Richtung des elektrischen Windes quer zur Strömungsrichtung des Gases im jeweiligen Rohr auf die Rohrinnenwand zu, wo sie als Belag abgeschieden, angelagert und somit aus dem Gasstrom entfernt werden.

Dieser Belag wird intervallmässig mit im Kreislauf geführtem Prozesswasser nach unten abgespült und gelangt schliesslich in das Belebungsbecken 2.

Der bei der Ausführung nach Figur 2 über dem Nasselektrofilter 13 angeordnete Trennboden 19 verhindert, dass das vom Biowäscher 11 abtropfende Prozesswasser im Nasselektrofilter 13 zu einem Spannungsabfall führt.

Vor dem Reinigungsaustritt 16, also dem Kamin, ist der Tropfenabscheider 17 angeordnet, der verhindert, dass im aus dem Biowäscher 11 oder Nasselektrofilter 13 austretenden, gereinigten Gas mitgerissene Tropfen in den Kamin gelangen. Dieser Tropfenabscheider 17 wird intervallmässig mit gereinigtem Prozesswasser automatisch gespült.

Das kreislaufgeführte Prozesswasser, welches inbesondere vom Biowäscher 11 und vom Vorabscheider 7 kontinuierlich in das Belebungsbecken 2 strömt und auch das vom Nasselektrofilter 13 und dem Tropfenabscheider 17 intermittierend in das Belebungsbecken 2 strömt, sammelt sich im Belebungsbecken 2. Das Belebungsbecken 2 enthält damit alle abgeschiedenen Feststoffe und Belebtschlamm und ist, wie bereits erwähnt, durch die Bodenbelüftung 3 von der Frischluftquelle 4 her belüftet. Entsprechend erfolgt im Belebungsbecken 2 die weitere Oxidation der organischen Inhaltsstoffe des Abgases.

## Patentansprüche

1. Verfahren zur Reinigung eines Abgases, das Verunreinigungen in Form von Aerosolen, Staub und organischen Gasen enthält, **dadurch gekennzeichnet, dass** die Abscheidung der im Abgas vorhandenen Verunreinigungen in einem einzigen Arbeitsdurchlauf mittels einem mit Prozesswasser kontinuierlich berieselten Biowäscher (11) und einem mit Prozesswasser diskontinuierlich abgereinigten Nasselektrofilter (13) durchgeführt wird, wobei das dem Biowäscher (11) und dem Nasselektrofilter (13) zugeführte Prozesswasser in einem geschlossenen, ein Belebungsbecken (2) enthaltenden Kreislauf geführt wird.

2. Verfahren nach Anspruch 1, **dadurch gekennzeichnet, dass** dem Biowäscher (11) im Belebungsbecken (2) regeneriertes, in einem Wärmetauscher (26) gekühltes und in einem Feststoffabscheider (22) gereinigtes Prozesswasser zur kontinuierlichen Berieselung zugeführt wird, und das Nasselektrofilter (13) mit unmittelbar aus dem Belebungsbecken (2) entnommenen, regeneriertem Prozesswasser intermittierend abgereinigt wird.

3. Verfahren nach Anspruch 1 oder 2, **dadurch gekennzeichnet, dass** das Abgas vor dem Durchströmen des Biowäschers (11) und des Nasselektrofilters (13) durch einen Vorabscheider (7) geführt wird, der gleichzeitig die Funktion der Gasverteilung übernimmt, welcher Vorabscheider mit unmittelbar aus dem Belebungsbecken (2) entnommenen, regeneriertem Prozesswasser kontinuierlich berieselt wird.

4. Verfahren nach einem der vorangehenden Ansprüche, **dadurch gekennzeichnet, dass** das Reingas in einem Tropfenabscheider (17) einer Tropfenabscheidung unterworfen wird, welcher Tropfenabscheider (17) mit im Belebungsbecken (2) regeneriertes, in einem Wärmetauscher (26) gekühltes und in einem Feststoffabscheider (22) gereinigtes Prozesswasser intermittierend abgereinigt wird.

5. Verfahren nach einem der vorangehenden Ansprüche, **dadurch gekennzeichnet, dass** die Betriebstemperatur des im Kreislauf geführten Prozesswassers bei wechselnden Gasfeuchten durch eine Regelung der Wärmeentnahme in einem Wärmetauscher (26) konstant gehalten wird.

6. Verfahren nach einem der vorangehenden Ansprüche, **dadurch gekennzeichnet, dass** das Abgas nach dem Durchströmen des Vorabscheiders (7) zuerst durch den Nasselektrofilter (13) und danach durch den Biowäscher (11) geleitet wird.

7. Verfahren nach Anspruch 5, wobei der Biowäscher (11) über dem Nasselektrofilter (13) angeordnet ist, **dadurch gekennzeichnet, dass** das dem Biowäscher (11) entströmende Prozesswasser der Berieselung desselben unter Umgehung des Nasselektrofilters (13) unmittelbar dem Belebungsbecken (2) zugeführt wird.

8. Verfahren nach einem der Ansprüche 1-5, **dadurch gekennzeichnet, dass** das Abgas nach dem Durchströmen des Vorabscheiders (7) zuerst durch den Biowäscher (11) und danach durch den Nasselektrofilter (13) geleitet wird.

9. Verfahren nach einem der vorangehenden Ansprüche, **dadurch gekennzeichnet, dass** die Durchlaufgeschwindigkeit des zu reinigenden Gases sowohl im Biowäscher (11) als auch im Nasselektrofilter (13) 1-3 m/Sek. beträgt und die Verweilzeit im Biowäscher (11) und im Nasselektrofilter (13) jeweils 1-6 Sek. beträgt.

10. Anlage zur Durchführung des Verfahrens nach Anspruch 1, **gekennzeichnet durch** einen Behälter (1), in welchem ein Biowäscher (11) zusammen mit einem Nasselektrofilter (13) angeordnet ist.

11. Anlage nach Anspruch 10, **dadurch gekennzeichnet, dass** unter dem Biowäscher (11) und Nasselektrofilter (13) ein Belebungsbecken (2) angeordnet ist, welches über Leitungen (21,25,27,28; 10,15) zur Kreislaufführung von Prozesswasser mindestens mit einer Sprühvorrichtung (12) zur kontinuierlichen Berieselung des Biowäschers (11) und einer weiteren Sprühvorrichtung (14) zur intervallmässigen Abreinigung des Nasselektrofilters (13) in Verbindung steht.

12. Anlage nach Anspruch 10 oder 11, **dadurch gekennzeichnet, dass** der Eintritt (6) für das zu reinigende Abgas in den Behälter (1) unterhalb des Biowäschers (11) und des Nasselektrofilters (13) und oberhalb des Belebungsbeckens (2) angeordnet ist.

13. Anlage nach einem der Ansprüche 10-12, **dadurch gekennzeichnet, dass** beim Eintritt (6) für das zu reinigende Abgas ein die Gasverteilfunktion im Behälter übernehmender Vorabscheider (7) angeordnet ist, über welchem eine mittels einem Teilstrom des Prozesswassers beschickte Sprühvorrichtung (8) angeordnet ist, welche unmittelbar über eine Leitungsanordnung (9,10) mit dem Belebungsbecken (2) in Verbindung steht.

14. Anlage nach einem der Ansprüche 10-13, **dadurch gekennzeichnet, dass** die Sprühvorrichtung (14) zur intervallmässigen Abreinigung des Nasselektrofilters (13) mit einem Teilstrom des Prozesswassers beschickt ist und über eine Leitungsanordnung (10,15) unmittelbar mit dem Belebungsbecken (2) in Verbindung steht.

15. Anlage nach einem der Ansprüche 10-14, **dadurch gekennzeichnet, dass** vom Belebungsbecken (2) eine Leitung (21) für einen Teilstrom des Prozesswassers zu einem Feststoffabscheider (22) verläuft, der von einem Wärmetauscher (26) zur Kühlung dieses Teilstromes des Prozesswassers gefolgt ist, welcher Wärmetauscher (26) über eine Leitungsanordnung (27, 28) mit der Sprühvorrichtung (12) zur kontinuierlichen Berieselung des Biowäschers (11) in Verbindung steht.

16. Anlage nach einem der Ansprüche 10-15, **dadurch gekennzeichnet, dass** der Behälter (1) einen Reingasaustritt (16) aufweist, bei welchem ein Tropfenabscheider (17) angeordnet ist, über welchem eine Sprühvorrichtung (18) zur intervallmässigen Abreinigung derselben angeordnet ist, welche Sprühvorrichtung (18) zur Beschikkung mittels gereinigtem, gekühlten Prozesswasser mit dem Wärmetauscher (26) in Verbindung steht.

17. Anlage nach einem der Ansprüche 10-16, **dadurch gekennzeichnet, dass** das Belebungsbecken (2) mit einer Quelle (5) zur Zufuhr eines Nahrungsmittels zur Stickstoff/Phosphorversorgung und mit einer weiteren Quelle (4) zur Zufuhr von Frischluft in Verbindung steht.

18. Anlage nach einem der Ansprüche 10-17, **dadurch gekennzeichnet, dass** die vom Belebungsbecken (2) zum Feststoffabscheider (22) verlaufende Leitung (21) mit einer Quelle (23) zur Zufuhr eines Flockungsmittels in Verbindung steht.

19. Anlage nach einem der Ansprüche 10-18, **gekennzeichnet durch** eine in Strömungsrichtung des Prozesswassers nach dem Wärmetauscher (26) angeordnete Auslassleitung (29) zur Entfernung von überschüssigem Wasser.

20. Anlage nach einem der Ansprüche 10-19, **dadurch gekennzeichnet, dass** das Nasselektrofilter (13) im Behälter (1) über dem Biowäscher (11) angeordnet ist, derart, dass das vom Nasselektrofilter (13) intervallmässig abtropfende Prozesswasser den Biowäscher (11) durchströmt.

21. Anlage nach einem der Ansprüche 10-19, **dadurch gekennzeichnet, dass** der Biowäscher (11) im Behälter (1) über dem Nasselektrofilter (13) angeordnet und unter dem Biowäscher (11) ein Trennboden (19) zur Aufnahme des vom Biowäscher (11) kontinuierlich abtropfenden Prozesswasser eingesetzt ist, von welchem Trennboden (11) eine den Nasselektrofilter (13) umgehende Ablaufleitung (20) direkt zum Belebungsbecken (2) verläuft.
